# EUROPÄISCHE PATENTSCHRIFT

(11) **EP 3 610 244 B1**
(45) Veröffentlichungstag und Bekanntmachung des Hinweises auf die Patenterteilung: **08.06.2022**
(21) Anmeldenummer: 18720531.5
(22) Anmeldetag: 11.04.2018
(51) Int. Cl.: G01N 21/65

(54) **FLÜSSIGKEITSZELLE ZUR MIKROSKOPISCHEN BILDGEBUNG UND RAMANSPEKTROSKOPISCHEN MATERIALANALYSE VON PARTIKELSUSPENSIONEN**
LIQUID CELL FOR THE MICROSCOPIC IMAGING AND RAMAN SPECTROSCOPIC MATERIAL ANALYSIS OF PARTICLES SUSPENSIONS
CELLULE À LIQUIDE SERVANT À L'IMAGERIE PAR MICROSCOPIE ET À L'ANALYSE PAR SPECTROSCOPIE RAMAN DE MATÉRIAUX DE SUSPENSIONS DE PARTICULES

(30) Priorität: 11.04.2017 DE 102017107857
(43) Veröffentlichungstag der Anmeldung: 19.02.2020
(73) Patentinhaber: rap.ID Particle Systems GmbH, 12555 Berlin (DE)
(72) Erfinder: LANKERS, Markus, 15566 Schöneiche (DE); VALET, Oliver, 12459 Berlin (DE); KRAPF, Lisa, 12163 Berlin (DE); GOEDE, Karsten, 10249 Berlin (DE); BOBER, Steve, 15345 Altlandsberg (DE)
(74) Vertreter: Grund, Martin
(86) Internationale Anmeldenummer: PCT/EP2018/059344
(87) Internationale Veröffentlichungsnummer: WO 2018/189274

(56) Entgegenhaltungen:
- US-A- 3 552 865
- US-A1- 2002 064 800
- US-A1- 2010 053 605
- US-A1- 2012 034 686

## Beschreibung

Die Erfindung betrifft eine Flüssigkeitszelle gemäß Anspruch 1, eine Haltevorrichtung gemäßAnspruch 7 sowie ein Mikroskop gemäß Anspruch 8.

Viele Pharmazeutika werden standardmäßig auf Fremdpartikel und/oder Proteinaggregate untersucht. Oftmals ist dies sogar durch behördliche Vorschriften wie durch die US FDA vorgeschrieben. Solche Vorschriften betreffen beispielsweise die maximalen Partikelzahlen, gegliedert nach verschiedenen Größenklassen. Um zu gewährleisten, dass Grenzwerte nicht überschritten werden, müssen Partikel identifiziert und quantifiziert werden. Dazu gehört, dass Aggregate in Proteinlösungen, Fremdpartikel und Luftblasen detektiert und unterschieden werden. Dies geschieht durch eine Vorrichtung die dazu eingerichtet ist, die Detektion von Partikeln sowie die Bestimmung deren Größe und Form zu ermöglichen. Die Detektion von Partikeln kann auf verschiedene Arten erfolgen. Üblich sind jedoch bildgebende Verfahren, wie beispielsweise Lichtmikroskopie.

Bildgebung von Partikeln in Flüssigkeitszellen und Durchflusszellen ist bereits aus dem Stand der Technik bekannt (US 5,471 ,294, EP 1329706, US7605919). Mit der FlowCam können zum Beispiel Bilder von Partikeln beim Durchfließen der Zelle aufgenommen und analysiert werden (US7605919). Über Formparameter der Partikel und Auswertealgorithmen können die Partikel verschiedenen Klassen (Beispielsweise Proteinaggregate, Luftblasen oder Silikontropfen) zugeordnet werden. Die genaue Bestimmung des Stoffes, aus dem das Partikel besteht, ist allerdings nicht möglich. Dabei wäre es bei derartigen Verfahren vorteilhaft, wenn die Bildgebung von Partikeln in einer Flüssigkeit mit der Bestimmung des Partikelmaterials durch Ramanspektroskopie in dergleichen Messzelle durchgeführt werden könnte. Dies würde es beispielsweise erlauben, verschiedene Proteine oder Polymere zu identifizieren bzw. differenzieren.

Für eine kombinierte, bildgebende und zielgerichtete, d.h. basierend auf den aufgenommen Bildern, Raman-spektroskopische Messung müsste ein derartig eingerichtetes Mikroskop umfassende optische und mechanische Einrichtungen aufweisen. Dies liegt unter anderem daran, dass ramanspektroskopische Messungen üblicherweise Punktmessungen sind und sichergestellt werden muss, dass die ramanspektroskopische Messung am richtigen Ort durchgeführt wird. Nur so können die beiden Messmethoden zu einer korrelierten Gesamtmessaussage kombiniert werden.

Es sind Verfahren bekannt, bei denen das Anfahren der Partikel in sogenannten "wet cells" zur Ramanspektroskopie automatisiert durchgeführt wird. Die automatische Erkennung der Größe und Form sowie des Ortes von Mikropartikeln in einer Suspension mit dem Ziel Schwingungsspektroskopie durchzuführen, wurde bereits von Malvern (Malvern Application Note "Characterization of protein aggregates in Suspension and on a filter membrane by Morphologically-Directed Raman Spectroscopy") beschrieben. Hier sind Ergebnisse veröffentlicht, die zeigen, dass mit kombinierter, automatisierter Erkennung von Partikeln und Ramanspektroskopie in der "thin-path wet cell" verschiedene Partikelspezies in einer Proteinlösung unterschieden werden können. Die Bildgebung der Probe erfolgt im Durchlicht, weshalb sowohl für die obere als auch die untere Seite der Messzelle ein transparentes Messfenster aus Quarz verwendet wird.

Raman-spektroskopische Analysen von spezifischen Nukleinsäuren in Proben werden in US 2012/0034686 A1 beschrieben. Apparaturen zur Probennahme und Identifizierung von Dämpfen und Aerosolen in Luft oder anderen Gasen werden in US 2010/0053605

A1 offenbart. US 2002/0064800 A1 beschreibt Mikrochips, welche dünne Flüssigkeitsdurchläse und reflektionserhöhende Spiegelfilme auf der Ober- und Unterfläche der Flüssigkeitsdurchlässe aufweisen. Eine Küvette zur Beobachtung eines Strömungskanals umfassend eine Flüssigkeitszelle wird in US 3, 552, 865 beschrieben. Eine weitere Flüssigkeitszelle, die auch für die Ramanspektroskopie an Partikeln genutzt werden kann, ist in DE 102013015033 beschrieben. Die Abbildung in dieser Durchflusszelle erfolgt in Auflichtgeometrie.

Problematisch an beiden vorgenannten Messzellen ist der hohe Untergrund des Substrates. Das üblicherweise verwendete Glas oder Quarzglas erzeugt bei der Messung ebenfalls ein Ramansignal, welches das zu messende Signal der Probe so überlagern kann, dass dessen Qualität deutlich schlechter und damit die Identifizierung der Partikelsubstanz schwieriger wird. Dies wird insbesondere bei der Messung von Mikropartikeln relevant, da hier der durch das Anregungslicht belichtete Fleck deutlich größer als das zu analysierende Partikel und somit der Anteil des

Hintergrundsignals sehr groß sein kann.

Neben dem hohen Untergrund der Messungen, sind auch folgende Probleme bei derartigen Messungen zu lösen.

Luftblasen, die sich beim Befüllen der Messkammer bilden können, müssen vermieden werden, da sie zu Messartefakten führen können. Die Bildung von Luftblasen ist besonders bei hochviskosen Suspensionen problematisch.

Um eine möglichst vielseitigen Einsatzmöglichkeit der Flüssigkeitszelle zu gewährleisten, muss die Zelle aus inerten Materialien gefertigt sein und muss insbesondere einfach zu reinigen sein, damit eine Kontamination von folgenden Proben ausgeschlossen werden kann.

Weiterhin ist die Schichtdicke der zu untersuchenden Suspension kritisch, da bei einer zu dicken Schicht eine optimale Fokussierung auf die Partikel nicht möglich ist. Umgekehrt besteht bei einer sehr dünnen Flüssigkeitsschicht die Gefahr, dass ein sehr hohes Hintergrundsignal durch das sich nahe dem Fokus befindende Fenstermaterial erzeugt wird. Dieses Hintergrundsignal überlagert das Ramansignal und erschwert die spektroskopische Bestimmung des Partikelmaterials.

Daneben sollte das untersuchbare Probenvolumen von variabler Größe sein, damit einerseits Proben mit niedriger Partikelzahl untersucht werden können (erfordert ein eher großes Volumen), andererseits aber Proben untersucht werden können, die nur ein in kleinen Mengen vorliegen (kleines Probenvolumen).

Häufig ist der Bildkontrast, also der Kontrast zwischen Partikel und Hintergrund bei den bekannten Verfahren nicht ausreichend hoch. Dies führt zu Fehlern sowohl bei der Messung als auch bei der Auswertung der Messdaten.

Eine weitere Schwierigkeit bei der Bestimmung des Partikelmaterials durch Ramanspektroskopie besteht darin, eine ausreichend hohe Signalqualität zu erreichen. Oft müssen zum Beispiel Protein-Aggregate in einer hochkonzentrierten Proteinlösung untersucht werden, deren Ramansignal sich nur wenig von dem der umgebenden Flüssigkeit unterscheidet.

Die Aufgabe der Erfindung besteht somit darin, eine Flüssigkeitszelle bereitzustellen, mit der die Vielzahl der oben genannten Probleme in vorteilhafter Weise gelöst werden, insbesondere soll das Signal-zu-Rauschverhältnis bei Messungen in einer erfindungsgemäßen Flüssigkeitszelle hinsichtlich bildgestützter, ramanspektroskopischer Messungen verbessert werden. Weiterhin besteht die Aufgabe der Erfindung darin, ein Mikroskop bereitzustellen, mit dem die oben genannten Aufgaben vorteilhaft bewirkt werden können.

Das erfindungsgemäße Problem wird durch eine Flüssigkeitszelle gemäß Anspruch 1 gelöst. Vorteilhafte Ausgestaltungen der Erfindung sind in den Unteransprüchen angegeben und werden nachfolgend beschrieben. Die Erfindung wird durch die Ansprüche definiert.

Danach weist eine Flüssigkeitszelle zur mikroskopischen Bilderfassung und bildgestützten, ramanspektroskopischen Materialanalyse einer Partikelsuspension in einem Auflicht-Mikroskop, zumindest die folgenden Komponenten auf:
- eine Messkammer, aufweisend einen Boden, ein dem Boden gegenüberliegendes insbesondere parallel zum Boden verlaufendes Messfenster und eine Dichtung, wobei
   der Boden zumindest in einem Bereich der Auflagefläche der Dichtung eben ausgeführt ist, und
- ein Andruckelement, das so ausgebildet ist, dass die Flüssigkeitszelle in eine Schiebeführung, welche Teil deiner Haltevorrichtung ist, eingeführt werden kann,
dadurch gekennzeichnet, dass
das Andruckelement, nach Einführung in die Schiebevorrichtung, von der Schiebeführung niedergehalten wird, so dass das Andruckelement auf das Messfenster, die Dichtung und den Boden drückt, so dass die Messkammer abgedichtet wird, wobei das Andruckelement mit einem ersten Bereich auf oder oberhalb des Messfensters angeordnet ist und insbesondere mit einem zweiten Bereich auf oder oberhalb des Bodens angeordnet ist,
und ferner dadurch, dass
der Boden eine reflektierende Oberfläche aufweist, die so beschaffen ist, dass durch das Messfenster einfallendes Raman-Anregungslicht an der reflektierenden Oberfläche gerichtet reflektiert wird, so dass das Ramansignal eines Partikels, insbesondere aufgrund der zweimaligen Anregungschance, erhöht wird.

Die reflektierende Oberfläche weist dabei einen Reflexionsgrad von insbesondere mehr als 70% in zumindest einem breiten Bereich des elektromagnetischen Spektrums auf - insbesondere im ultra-violetten, sichtbaren sowie im nahen infraroten Spektralbereich. Die Oberfläche ist so beschaffen, dass auftreffende Lichtstrahlen gerichtet reflektiert werden und zwar weitgehend unabhängig vom Einfallswinkel, d.h. die Reflexion ist insbesondere nicht nur auf Grenzwinkel für Totalreflexion beschränkt. Die reflektierende Oberfläche bewirkt in vorteilhafterweise, dass das Signal-zu-Rauschverhältnis bei ramanspektroskopischen Messungen verbessert wird, insbesondere dadurch, dass der Anregungslaser aufgrund der Reflexion die oder den Partikel zweimal anregt, und zwar beim Weg vom einem Objektiv zur Probe und auf dem Weg nach der Reflexion an der reflektierenden Oberfläche. Zudem wird ein Hintergrundsignal des Bodens unterdrückt, wodurch das Probensignal besser erfassbar wird. Der Boden sollte, um eine ausreichend gerichtete Reflexion ausreichende Güte zu bewirken und auch um vorteilhaft für eine Dunkelfeldbeleuchtung verwendbar zu sein, eine in ausreichendem Maße glatte und ebene Oberfläche aufweisen. Zur Charakterisierung der Glattheit bzw. Rauheit kann auch die sogenannte RZ-Zahl der Oberfläche herangezogen werden. Die RZ-Zahl charakterisiert die insbesondere gemittelte Rauheit einer Fläche. Die Ermittlung der RZ-Zahl ist dem Fachmann geläufig. Die RZ-Zahl sollte insbesondere kleiner als 0,1, bevorzugt kleiner als 0,01 sein. Die Erhöhung des Ramansignals ist also insbesondere nicht die Folge eines Proben-Oberflächeneffekts wie er beispielsweise in der "surface-enhanced Raman spectroscopy (SERS) verwendet wird.

Insbesondere erstreckt sich der Boden entlang einer Ebene.

Die Erfindung ermöglicht in vorteilhafter Weise den Einsatz von Mikroskopen bzw. von Objektiven mit vergleichsweise kleinen Arbeitsabständen, insbesondere bis hinunter zu 1 mm, und dadurch entsprechend großer numerischer Aperturen, was besonders hinsichtlich eines verbesserten Signal-zu-Rauschverhältnisses bei Ramanmessungen vorteilhaft ist.

Lösungen mit einer gekrümmten, beispielsweise mit einer kugel- oder zylinderförmigen Bodengeometrie oder Messkammergeometrie, sind der erfindungsgemäßen Lösung unterlegen, da sich eine gekrümmte Messkammergeometrie nicht für den Einsatz von Objektiven mit kurzen Arbeitsabständen eignet, sondern größere Arbeitsabstände, insbesondere mehr als 5 mm, und entsprechend niedrigeren numerischen Aperturen erfordert, um den vergrößerten Abstand der Messkammerdecke zum Boden zu kompensieren.

Die numerische Apertur einer solchen gekrümmten Messkammergeometrie ist damit insbesondere im Vergleich zu der erfindungsgemäßen Flüssigkeitszelle mit einem ebenen Boden und einem insbesondere ebenen Messfenster - bei gleichem Linsendurchmesser - mehr als gedrittelt, was zu einer mehr als 9-mal niedrigeren Sammeleffizienz für das Ramansignal führt.

Weiterhin bergen gekrümmte Messkammergeometrien die Gefahr einer optischen Refokussierung insbesondere des Anregungslichtes, was zu Fehlsignalen führen kann.

Gemäß der Erfindung ist der Boden der Flüssigkeitszelle im Bereich der Auflage der Dichtung plan oder auch planar ausgeführt, weist also insbesondere keine Ausnehmung auf. Der so geformte Boden ist im Bereich der Dichtungsauflage insbesondere eben und form schlüssig mit den Bereichen des Bodens geformt, auf denen die Probe aufgebracht wird oder die von der Messkammer umfasst werden.

Mit einem so ausgestalteten Boden können auch sehr niedrige Dichtungen verwendet werden. Hier hat sich insbesondere gezeigt, dass beispielsweise Dichtungen aus Teflon (i.e. Polytetrafluorethylen, PTFE), insbesondere in Form von Teflonfolie oder anderen dichtenden, dünnen Materialien, wie beispielsweise Polyethylen, Polyvinylchlorid, Polycarbonat vorteilhaft zum Einsatz kommen können. Die Dicke solcher Folien (und damit die Höhe der resultierenden Dichtung) liegt insbesondere im Bereich weniger Mikrometer, beispielsweise zwischen 50 µm und 500 µm.

Der Vorteil einer insbesondere ausnehmungslosen Flüssigkeitszelle ist insbesondere die vereinfachte Reinigung der Flüssigkeitszelle bzw. des Bodens, da bekanntermaßen jede Ausnehmung Ablagerungsbereiche für Verunreinigung ausbildet, z.B. an den Kanten.

Die flachen Dichtungen können auch eine deutlich größere Auflagefläche als die dicken Dichtungen aufweisen, da sie nicht in eine Ausnehmung einfügbar sein müssen. Eine solche vergrößerte Auflagefläche erhöht die mechanische Stabilität der Dichtung, insbesondere im Falle geringer Dichtungsdicken und verbessert die Handhabbarkeit.

Diese flachen Dichtungen für die ausnehmungslosen bzw. planaren Flüssigkeitszellen erlauben weiterhin in vorteilhafter Weise, von einer flach-zylindrischen Konfiguration des Messvolumens abzuweichen und zum Beispiel flachquaderförmige Volumina zu verwenden. Letztere erlauben im Falle der Verwendung der Flüssigkeitszelle als Durchflusszelle ein günstigeres Strömungsprofil als Aufbauten, bei denen der Strömungsquerschnitt zum Beispiel in der Mitte zwischen Einlass und Auslass breiter wird, wie es im Falle eines flach-zylindrischen Volumens der Fall wäre.

Daher ist gemäß einer weiteren Ausführungsform der Erfindung vorgesehen, dass die Flüssigkeitszelle eine quaderförmige Messkammer aufweist.

Die erfindungsgemäße Flüssigkeitszelle kann vorteilhaft in Mikroskopen zum Einsatz kommen, die über eine Epi-, oder Auflichtgeometrie bezüglich des Strahlengangs verfügen, bei denen sowohl die Beleuchtung als auch das Messsignal der Probe über die gleiche Linse oder das gleiche Objektiv erfolgt (Epi-Konfiguration). Diese Geometrie erweist sich oftmals als vorteilhaft, da so beispielsweise eine Zulauföffnung und auch eine Ablauföffnung im Boden angeordnet sein kann, der Boden der Flüssigkeitszelle also für Aufgaben, wie beispielsweise der Temperierungoder Durchflusserzeugung zur Verfügung steht, ohne mit der Optik des Mikroskops zu interferieren.

Die erfindungsgemäße Flüssigkeitszelle ist vorteilhaft in kombinierten Messapparaten einsetzbar, die in Auflichtgeometrie sowohl Bilderfassung als auch bildgestützte Raman-Spektroskopie durchführen. Eine solche erfindungsgemäße Flüssigkeitszelle ist aus den Komponenten einfach aufbaubar und kann besonders wirtschaftlich hergestellt werden. Jede Komponente der Flüssigkeitszelle ist insbesondere modular austauschbar.

Gemäß einer Ausführungsform weist der Boden eine Zulauföffnung und eine Ablauföffnung, zum Befüllen, Entleeren, Vakuumieren und/oder Erzeugen eines Durchflusses in der Messkammer auf, wobei die Zulauf- und/oder die Ablauföffnung insbesondere in einem Bereich des Bodens angeordnet ist / sind, der Teil der Messkammer ist. Diese Öffnungen können weitere Anschlüsse umfassen oder solche Anschlüsse aufweisen.

Die Zulauf- und Ablauföffnung sind insbesondere zum vergleichsweise schnellen Durchpumpen und/oder Durchdrücken einer größeren Flüssigkeitsmenge ausgebildet. Wobei die Öffnungen für Flüssigkeitsmengen von insbesondere 20 µl bis 100µl pro Minute ausgelegt sind.

Vorteilhaft ist es, wenn die Zulauf- und/oder Ablauföffnung so ausgeführt sind, dass Kanülenspitzen mit den Öffnungen verbindbar, anbringbar oder flüssigkeitsschlüssig aufsetzbar sind. Die Öffnungen haben insbesondere einen Durchmesser von einem Millimeter.

Gemäß einer Ausführungsform der Erfindung weist die reflektierende Oberfläche des Bodens ein Metall oder eine Metalllegierung auf, wobei insbesondere der Boden aus dem Metall oder der Metalllegierung besteht. Die Oberfläche und der Boden können also einstückig ausgebildet sein.

So eignet sich beispielsweise ein Boden aus Edelstahl, der auf der reflektierenden Seite spiegelnd poliert ist. Ein solcher Boden ist in vorteilhafter Weise inert gegenüber den meisten Lösungen, kann leicht gereinigt werden und weist eine besondere Langlebigkeit auf.

Auf dem reflektierenden Boden kann gegebenenfalls eine Schicht aufgebracht sein, die beispielsweise eine Anlagerung von Suspensionsbestandteilen verhindert oder die reflektierende Oberfläche vor Einflüssen des Lösungsmittels bzw. der Suspension schützt.

Die reflektierendeOberfläche kann eine auf dem Boden angeordnete, beispielsweise galvanisch aufgebrachte, aufgedampfte oder aufgeklebte, reflektierende Schicht, wie beispielsweise Gold, Silber und/oder Nickel sein.

Der Boden kann insbesondere Glas, Quarzglas oder ein glasartiges Substrat aufweisen oder aus Glas, Quarzglas oder dem glasartigen Substrat bestehen, das als Substrat für die reflektierende Schicht dient.

Gemäß einer Ausführungsform der Erfindung ist die reflektierende Oberfläche semitransparent und insbesondere auf einem transparenten Substrat angeordnet. Das Substrat bildet insbesondere den Boden aus.

Das Substrat weist insbesondere Glas, Quarzglas oder glasartige Substanzen auf oder besteht aus Glas, Quarzglas oder glasartigen Substanzen. Der Vorteil von Glas, Quarzglas und glasartigen Substanzen ist der, dass diese Materialen die Eigenschaft besitzen molekular ebene, d.h. sehr flache, Oberflächen auszubilden können, ohne dass aufwendige Veredelungsschritte notwendig wären.

Die Semitransparenz der reflektierenden Oberfläche bezieht sich darauf, dass bei einer gegebenen Wellenlänge des Lichtes, die Oberfläche einen Bruchteil des auftreffenden Lichtes reflektiert und für einen anderen Bruchteil des Lichtes transparent ist, d.h. der Reflexionsgrad insbesondere kleiner als 95% ist und der Transmissionsgrad insbesondere größer als 5% ist.

Der Boden, insbesondere, wenn der Boden ein Glassubstrat oder Ähnliches aufweist, kann auf einem Unterteil angeordnet oder gelagert sein, wobei das Unterteil insbesondere eine Öffnung oder Ausnehmung insbesondere in der Mitte aufweist, so dass der Boden durch die Öffnung oder Ausnehmung optisch und/oder mechanisch, insbesondere für ein Mikroskopobjektiv zugänglich ist.

Die semitransparente Oberflächeeine kann eine auf dem transparenten Substrat angeordnete, semitransparente Schicht sein.

Eine solche Schicht kann beispielweise ein Metall oder eine Metalllegierung aufweisen, wobei die Schicht insbesondere eine Dicke von 10 nm bis 200 nm, insbesondere eine Dicke zwischen 50 nm bis 150 nm, aufweist.

Die semitransparente Schicht ist insbesondere eine Gold-, Silber- oder Nickelschicht, die insbesondere auf einem Substrat aus Glas oder Quarzglas aufgebracht, aufgedampft oder aufgeklebt ist.

Eine solche semitransparente Schicht erlaubt es, sowohl insbesondere durchlichtbasierte Mikroskopieverfahren als auch Ramanspektroskopie auf der gleichen Probe auszuführen, ohne dass eine andere Flüssigkeitszelle verwendet werden muss.

Insbesondere kann das Material der semitransparenten Schicht so gewählt werden, dass die Schicht in einem ersten Wellenlängenbereich semitransparent ist und in einem zweiten Wellenlängenbereich des Lichtes überwiegend oder vollständig reflektierend ist, insbesondere einen Reflexionsgrad von mehr als 60% aufweist.

Insbesondere ist es vorteilhaft, wenn die semitransparente Schicht im Bereich der ramanspektroskopischen Anregung, insbesondere im zweiten Wellenlängenbereich überwiegend reflektierend ist, insbesondere einen Reflexionsgrad von mehr als 60% aufweist und im Wellenlängenbereich eines verwendeten Durchlichtmikroskopie-Verfahrens, insbesondere im ersten Wellenlängenbereich, einen Transmissionsgrad von mindestens 30% aufweist.

So ermöglicht die erfindungsgemäße Flüssigkeitszelle ramanspektroskopische Messungen in Epi-Konfiguration und auch Durchlichtmikroskopie, was vorteilhafte Kontrastmechanismen zur optischen Abgrenzung des Partikels vom Hintergrund) eröffnet.

Bei den schichtbasierten Flüssigkeitszellen ist es beispielsweise auch vorgesehen, dass mehrere Schichten auf den Boden aufgebracht werden, dass beispielsweise eine Goldschicht auf eine Nickelschicht aufgedampft wird. Als oberste Schicht eine solchen Vielzahl an Schichten kann beispielsweise eine funktionelle Molekülschicht angeordnet sein.

Weiterhin kann die Vielzahl an Schichten auch dazu verwendet werden, optische Filterschichten, wie beispielsweise Bragg-Reflektoren, zu realisieren.

Dies schließt auch eine Schicht ein, die wie oben bereits erläutert, beispielsweise eine Anlagerung von Suspensionsbestandteilen verhindert oder die reflektierende Schicht ggf. vor schädlichen Einflüssen der Suspension schützt.

Gemäß einer Ausführungsform der Erfindung ist die reflektierende Oberfläche im sichtbaren Spektralbereich, insbesondere im Wellenlängenbereich von 300 nm bis 800 nm, oder im Bereich von 210 nm bis 1200 nm durchgehend reflektierend. Der Reflexionsgrad kann mehr als 70% erreichen.

Diese Variante der Erfindung gewährleistet in vorteilhafter Weise, dass eine erfindungsgemäße Flüssigkeitszelle in vielen Anwendungen unabhängig von den Anregungs- und Detektionswellenlängen einsetzbar ist.

Weiterhin lässt sich in vorteilhafterweise eine Dunkelfeldbeleuchtung mit einer solchen reflektierenden Oberfläche realisieren.

Die Flüssigkeitszelle weist ein Andruckelement auf, das so ausgebildet ist, dass die Flüssigkeitszelle im zusammengesetzten Zustand der Erfindung in eine Schiebeführung eingeführt werden kann, wobei das Andruckelement, wenn die Flüssigkeitszelle in die Schiebeführung eingeführt ist, von der Schiebeführung niedergehalten wird, so dassdas Andruckelement auf das Messfenster, die Dichtung und den Boden drückt, so dass die Messkammer abgedichtet wird, wobei das Andruckelement mit einem
ersten Bereich auf oder oberhalb des Messfensters angeordnet ist und insbesondere mit einem zweiten Bereich auf oder oberhalb des Bodens angeordnet ist.

Eine solche Flüssigkeitszelle wird im eingeschobenen Zustand flüssigkeits- und/oder gasdicht sein.

Die Schiebeführung wirkt also insbesondere so mit dem Andruckelement und dem Boden zusammen, dass die Flüssigkeitszelle zusammengehalten wird.

Das Andruckelement verwirklicht in vorteilhafter Weise, dass die Flüssigkeitszelle schnell und unkompliziert zusammengebaut werden kann. Durch einfaches sandwichartiges Zusammenfügen der Komponenten und anschließendes

Einschieben in eine Schiebeführung kann eine funktionstüchtige Flüssigkeitszelle erhalten werden.

Das Andruckelement ist insbesondere als Haltering ausführbar, so dass darüber hinaus auch im zusammengebauten Zustand der Flüssigkeitszelle eine Messung unter einem Mikroskop möglich ist, da in einem zentralen Bereich des Messfensters die Anregung und Detektion stattfinden kann, die ringförmige Ausgestaltung des Andruckelementes als Haltering also nicht mit der Optik eines Auflicht-Mikroskops interferiert.

Gemäß einer weiteren Ausführungsform der Erfindung weist die Flüssigkeitszelle ein Abstandelement auf, wobei das Abstandelement auf dem Boden der Flüssigkeitszelle insbesondere außerhalb der Messkammer auf dem Boden der Flüssigkeitszelle angeordnet ist, wobei das Andruckelement mit dem zweiten Bereich auf dem Abstandselement aufliegt, so dass das Messfenster durch das Andruckelement nur bis auf einen vordefinierten Abstand an den Boden angedrückt werden kann, wobei die Höhe das Abstandselements besagten Abstand des Messfensters vom Boden definiert.

Durch das Abstandselement sind insbesondere die Höhe und das Volumen der Messkammer, insbesondere der Abstand des Messfensters zum Boden der Messkammer, insbesondere durch die Höhe des Abstandselements einstellbar.

Durch das Abstandelement, das beispielsweise eine Unterlegscheibe oder ein Unterlegring sein kann, wird das modulare Prinzip der Flüssigkeitszelle vorteilhaft umgesetzt. Das Abstandselement ist insbesondere nicht fest mit dem Boden verbunden. Dadurch können Abstandelemente verschiedener Höhe verwendet werden, um unterschiedlich hohe Messkammern zu realisieren.

Gemäß einer weiteren Ausführungsform der Erfindung, weist die Flüssigkeitszelle ein Einlageelement auf, wobei das Einlageelement in der Ausnehmung zwischen Boden und Dichtung angeordnet ist, so dass die Dichtung um die Höhe des Einlageelements in der Ausnehmung nach oben verlagert angeordnet ist, insbesondere so dass das Messfenster bei einem durch das Abstandelement vordefinierten Abstand des Messfensters vom Boden bereits so auf der Dichtung aufliegt, dass die Messkammer dicht ist, wobei das Einlageelement insbesondere so dimensioniert ist, dass die Höhe des Einlageelements der Höhe des Abstandelements entspricht, oder um einen festen Betrag in der Höhe desAbstandselements abweicht.

Das Einlageelement, sorgt insbesondere dafür, dass eine Dichtigkeit auch für verschieden hohe Abstandselemente erreicht wird.

Das Einlageelement kann beispielsweise eine Einlegscheibe sein. Das Einlageelement ist insbesondere nicht fest mit dem Boden verbunden und trägt zum modularen Charakter der Erfindung bei.

Insbesondere ist ein System vorstellbar, dass neben der Flüssigkeitszelle auch eine Vielzahl an unterschiedlichen Einlageelementen und Abstandelementen umfasst, die je nach Bedarf verwendet werden. Dadurch lässt sich eine Vielzahl an Flüssigkeitszellen realisieren, die in der Höhe und im Volumen der Messkammer variieren.

Insbesondere ist durch die Verwendung unterschiedlicher Abstandselemente und Einlageelemente gewährleistet, dass zum einen die Flüssigkeitsschichtdicke in der Messkammer individuell auf die jeweilige Probe eingestellt werden kann und zum anderen auch das Volumen der Messkammer ausreichend groß oder klein gestaltet werden kann.

Das Einlageelement und das Abstandelement sind aufeinander abgestimmt, und zwar insbesondere so, dass ein Bruch durch Druck an den Außenkanten des Messfensters verhindert wird, und dennoch ein dichter Druckverschluss der Messkammer gewährleistet ist. Wie hoch die beiden Elemente im Einzelnen sein müssen ist dem Fachmann bekannt und kann unter anderem von der Tiefe der Ausnehmung, der Höhe der Dichtung und der Dicke des Messfensters abhängen.

Das Messfenster weist für Licht zumindest im Spektralbereich von 210 nm bis 1200 nm, bevorzugt im Spektralbereich 532 nm bis 785 nm, eine Transmission von größer als 80% auf, wobei das Messfenster insbesondere Quarzglas aufweist.

Mit einem solchen Messfenster ist es möglich, beispielsweise die Tryptophan-Fluoreszenz anzuregen und zu detektieren.

Das erfindungsgemäße Problem wird weiterhin auch durch eine Haltevorrichtung zum Verschließen und Fixieren einer erfindungsgemäßen Flüssigkeitszelle gelöst, wobei die Haltevorrichtung eine Schiebeführung aufweist, welche derart ausgestaltet ist, dass eine Flüssigkeitszelle in die Schiebeführung einschiebbar ist und wobei die Schiebeführung eine Andruckplatte aufweist, die dazu ausgebildet ist, über das Andruckelement, das Messfenster auf die Dichtung zu drücken, wenn die Flüssigkeitszelle in der Haltevorrichtung aufgenommen ist.

Das erfindungsgemäße Problem wird weiterhin durch ein Mikroskop mit den folgenden Merkmalen gelöst.

Ein solches Mikroskop weist Mittel zu mikroskopischen Bilderfassung und ramanspektroskopischen Messungen einer Partikelsuspension auf, wobei das Mikroskop ein optisches Auflicht-Mikroskop ist und wobei das Mikroskop eine erfindungsgemäße Flüssigkeitszelle und insbesondere eine erfindungsgemäße Haltevorrichtung aufweist.

Mit dem erfindungsgemäßen Mikroskop lassen sich in Auflichtgeometrie die vorgenannten Untersuchungen an Partikelsuspensionen durchführen, wobei in vorteilhafter Weise das Signal zu Rauschverhältnis insbesondere im Vergleich zu Flüssigkeitszellen mit einem nicht reflektierenden Substrat, durch die Verwendung der erfindungsgemäßen Flüssigkeitszelle verbessert ist.

Das Mikroskop kann ein Lichtmikroskop, das Optiken aufweist, die für den Einsatz insbesondere von 200 nm bis 1200 nm geeignet sind.

Ein Mittel zur mikroskopischen Bilderfassung umfasst beispielsweise ein Objektiv, einen Detektor wie beispielsweise eine Kamera, und/oder eine Lichtquelle, wie beispielsweise einen Laser, eine Halogenlampe oder andere Arten von Lichtquellen,wie Dioden oder Bogenlampen.

Ein Mittel für ramanspektroskopische Messungen umfasst beispielsweise einen Anregungslaser, einen Punktdetektor, sowie passende Filter für die RamanMessung.

In einer Ausführungsform der Erfindung weist das Mikroskop Mittel auf, die eine Dunkelfeldbeleuchtung der Probe in der Flüssigkeitszelle ermöglichen, wobei der reflektierende Boden der Flüssigkeitszelle als Reflektor für die eingestrahlte Dunkelfeldbeleuchtung dient.

Ein solches Mittel zur Dunkelfeldbeleuchtung weist beispielsweise ein spezielles Dunkelfeld-Objektiv auf, mit dem eine solche Dunkelfeldbeleuchtung in AuflichtGeometrie durchgeführt werden kann.

Die Dunkelfeldbeleuchtung hat dabei den Vorteil, dass für gewisse Proben und Partikel Suspensionen ein höherer Bildkontrast erreicht werden kann. Insbesondere Proben, deren Brechungsindex sich nur wenig von dem Lösungsmittel unterscheidet, können mit Hilfe der Dunkelfeldbeleuchtung und der erfindungsgemäßen Flüssigkeitszelle vorteilhaft detektiert und vermessen werden.

Dabei ist die Kombination von Dunkelfeldbeleuchtung mit der reflektierenden Oberfläche des Bodens der Flüssigkeitszelle besonders vorteilhaft, da die reflektierende Oberfläche des Bodens die Dunkelfeldbeleuchtung reflektiert, so dass möglichst wenig Streulicht vom Boden in das Objektiv zurückgestreut wird, was zu einem erhöhten Bildkontrast und damit zu einer besseren Identifizierung von Partikeln in einer Suspension führt.

Die Oberflächengüte ist bei der Dunkelfeldbeleuchtung sehr wichtig, da bereits geringe Unebenheiten ein Signal bewirken, welches nicht unbedingt von dem zu unterscheiden ist, welches ein Partikel, der auf der Oberfläche liegt, erzeugt.

Um Strukturen / Partikel gut zu erfassen sollte die Oberflächenrauheit nicht in derselben Größenordnung sein, wie das Partikel selbst. Da erfindungsgemäß Partikel im Submikrometerbereich oder im Mikrometerbereich spektroskopiert werden sollen, ist die Oberflächenrauheit entsprechend geringer, also insbesondere im Nanometer oder Subnanometerbereich.

Weitere Merkmale der hierin beschriebenen Flüssigkeitszellen werden nachfolgend anhand der Figurenbeschreibung erläutert. Figuren die nicht die Erfindung zeigen, dienen lediglich der Illustration.

Es zeigen:
- Fig. 1: eine schematische Abbildung eines Schnitts durch eine Flüssigkeitszelle;
- Fig. 2: eine schematische Abbildung eines Schnitts durch eine Variante der Flüssigkeitszelle;
- Fig. 3: verschiedene Darstellungen einer Haltevorrichtung mit einer Flüssigkeitszelle;
- Fig. 4: Diagramm zur Wirkung einer reflektierenden Oberfläche auf ein Ramansignal;
- Fig. 5: eine Flüssigkeitszelle ohne Einlageelement;
- Fig. 6: Bildfolge, die das Zusammensetzen einer Flüssigkeitszelle darstellt;
- Fig. 7: eine schematische Abbildung eines Schnitts durch eine Flüssigkeitszelle; und
- Fig. 8: verschiedene Ansichten einer Flüssigkeitszelle, die zur Durchlicht Mikroskopie geeignet ist.

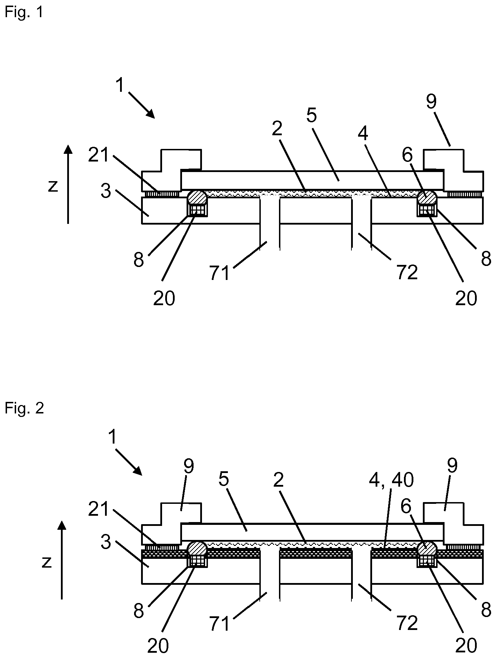

In Fig. 1 und Fig. 2 ist ein Schnitt entlang der z-Achse z (Richtung der Höhe und Raman-Anregung) durch eine Flüssigkeitszelle 1 abgebildet. Die Flüssigkeitszelle 1 weist einen Boden 3 mit einer reflektierenden Oberfläche 4, 40 auf, wobei der Boden 3 eine Ausnehmung 8 umfasst, in die eine Dichtung 6, hier in Form eines O-Rings, eingesetzt ist. Zwischen Dichtung 6 und der Ausnehmung 8 ist ein Einlageelement 20, hier in Form einer Einlegescheibe, angeordnet. Die Ausnehmung 8 ist in diesem Beispiel in Form einer Nut ausgebildet. Auf der Dichtung 6 ist ein Messfenster 5 angeordnet. Der von der Dichtung 6, dem Messfenster 5 und dem Boden 3 eingeschlossene Raum bildet eine Messkammer 2.

Ein Abstandselement 21 in Form einer Unterlegscheibe ist außerhalb der Messkammer 2 angeordnet, wobei das Abstandselement 21 in der Höhe (also entlang der z-Achse) so bemessen ist, dass einerseits die Dichtungswirkung über das Anpressen des Messfensters 5 auf die Dichtung 6 gewährleistet ist und andererseits auch gewährleistet ist, dass der Druck, der durch ein Andruckelement 9 in Kombination mit einer Schiebeführung (201) auf das Messfenster 5 vermittelt werden kann, nicht zu einem Bruch des Messfensters 5 führt. Mit anderen Worten, wird die tiefste Position des Andruckelements 9 in Bezug auf die z-Achse durch das Abstandselement 21 definiert. Der Boden 3 der Messkammer 2 weist zudem eine Zulauf- und eine Ablauföffnung 71, 72 auf. Durch diese Öffnungen 71, 72 kann eine Probenflüssigkeit ausgetauscht werden oder die Messkammer 2 gereinigt werden, ohne die Flüssigkeitszelle 1 auseinanderzubauen.

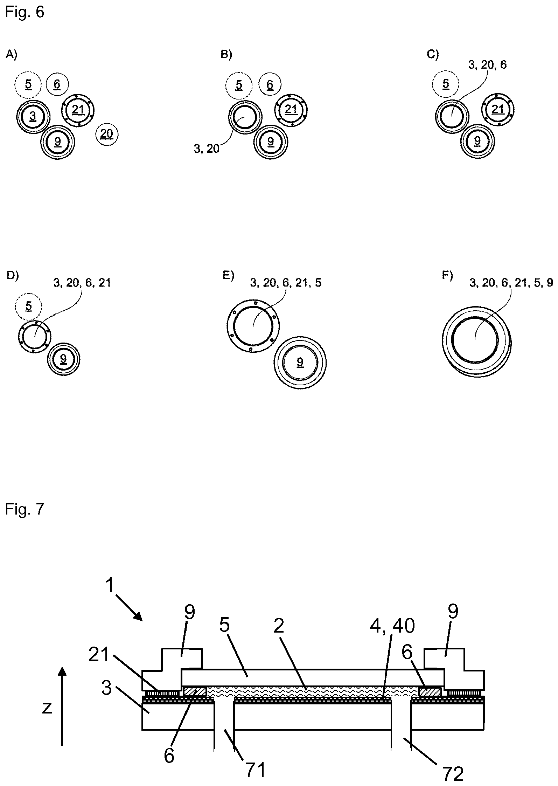

Die Flüssigkeitszelle 1 besteht aus nur wenigen Komponenten und ist modular aufgebaut (siehe Fig. 6), das heißt sie kann leicht gereinigt werden. Darüber hinaus können durch den modularen Aufbau die einzelnen Komponenten leicht ersetzt werden und für spezifische Anwendungen angepasst werden. Die Flüssigkeitszelle 1 ist so ausgelegt, dass die Schichtdicke der zu untersuchenden Probenlösung oder Suspension optimal für die Erkennung und bildgestützte Ramananalyse von Partikeln in Proteinformulierung ist. Weiterhin ist die Flüssigkeitszelle in den aufgeführten Beispielen kreisrund entlang derx-z Ebene ausgeführt. Andere Grundformen sind aber ohne weiteres denkbar und sollen hier nicht ausgeschlossen sein.

Der Boden 3 der Flüssigkeitselle 1 ist aus Edelstahl gefertigt. Er ist somit rostfrei, haltbar und tritt nicht mit der Probe in Wechselwirkung (inert). Der Boden 3 aus Edelstahl ist besonders gut zu reinigen.

In Fig. 1 ist die Edelstahloberfläche 4 des Bodens 3 geschliffen und/oder poliert. Damit wird eine hochgradig ebene und auf Nanometer-Ebene glatte, reflektierende Oberfläche 4 bereitgestellt. Die Rauheit kann hierbei anhand der sogenannten RZ-Zahl charakterisiert werden. Vorteilhaft ist eine RZ-Zahl von kleiner als 0,1, bevorzugt kleiner als 0,01.

In Fig. 2 ist eine Variante der Flüssigkeitszelle 1 abgebildet. Hier weist der Boden 3 auf Seite der Messkammer 2 eine reflektierende Schicht 40 als reflektierende Oberfläche 4 auf, die aus einem anderen Material als der Boden 3 gefertigt ist. Dies kann beispielsweise eine dünne Gold-, Silber- oder Nickelschicht sein, die auf einen Objektträger aufgedampft wurde. So kann je nach Anregungswellenlänge und zu messende Probe eine anderes reflektierendes Material verwendet werden. Zudem kann so eine kostengünstige Einwegvariante des Bodens 3 bereitgestellt werden. Auch hier ist die RZ-Zahl keiner als 0,1.

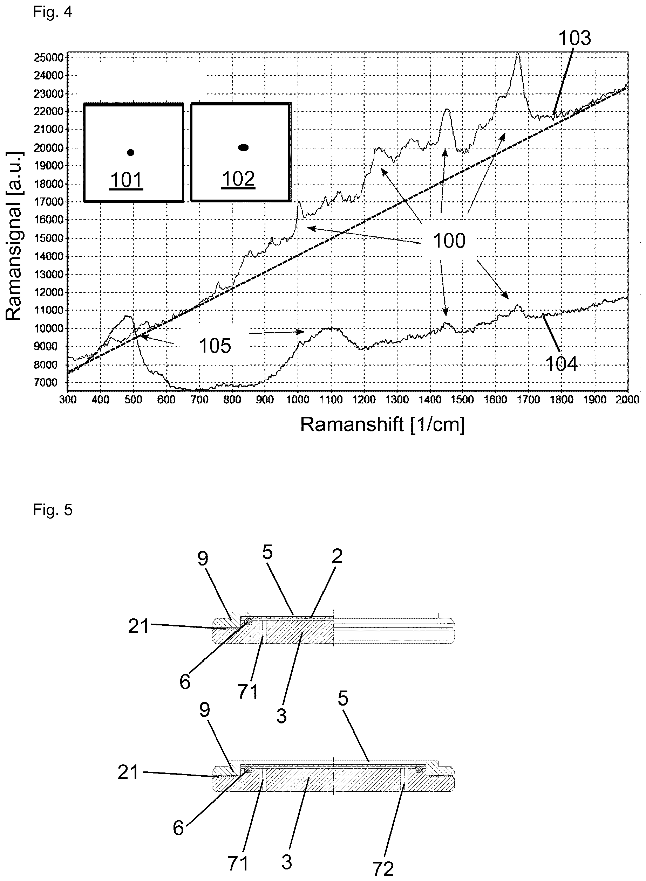

Eine weitere Variante der Flüssigkeitszelle ist in Fig. 5 abgebildet, einmal als reiner Schnittansicht und auch als Halbschnitt. Die Bezugszeichen und Anordnung der Komponenten sind im Wesentlichen gleich zu den Varianten in Fig. 1 und Fig. 2. Im Unterschied zu Fig. 1 und Fig. 2 weist die Flüssigkeitszelle in Fig. 5 jedoch kein Einlageelement 20 auf. Bei dieser Variante ist das Abstandelement 21, die Dicke der Dichtung 6 und die Nuttiefe (Ausnehmung 8) genau so gewählt, dass auf das Einlageelement 20 verzichtet werden kann.

In Fig. 7 ist ein Schnitt entlang der z-Achse z (Richtung der Höhe und Raman-Anregung) durch eine Flüssigkeitszelle 1 abgebildet. Die Flüssigkeitszelle 1 weist einen Boden 3 mit einer reflektierenden Oberfläche 40 auf, wobei der Boden 3 aus einem transparenten Substrat, nämlich Glas gefertigt ist und die reflektierende Oberfläche semitransparent ist, d.h. eine Metallschicht von nur 50 nm aufweist. Im Unterschied zu den Beispielen aus Fig. 1 und Fig. 2 weist der Boden keine Ausnehmung auf, in die die Dichtung 6 eingelegt ist, sondern ist im Bereich der Auflagefläche der Dichtung 6 plan. Die Dichtung 6 ist aus einer Teflon Folie gefertigt und nur 100 µm hoch, so dass keine Ausnehmung benötigt wird. Mit dieser Flüssigkeitszelle kann aufgrund des transparenten Bodens 3 und der semitransparenten Metallschicht sowohl Ramanspektroskopie in Epi-Konfiguration als auch Durchlichtmikroskopie durchgeführt werden, ohne dass die Vorteile der reflektierenden Flüssigkeitszelle für die Ramanspektroskopie merklich beinträchtig würden.

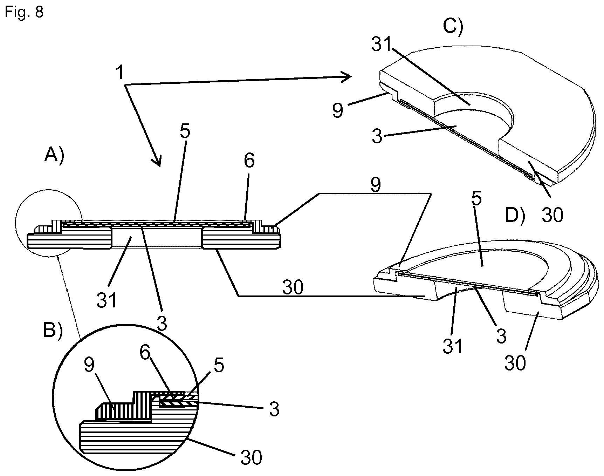

In Fig. 8 ist eine weitere Ausführungsform der Erfindung in verschiedenen Ansichten dargestellt. Im Einzelnen ist in A) eine Schnittansicht durch die Flüssigkeitszelle 1, in B) eine vergrößerte Detailansicht der Schnittansicht A), in C) eine perspektivische Schnittansicht von unterhalb der Flüssigkeitszelle 1 und in D) eine perspektivische Schnittansicht der Flüssigkeitszelle 1 von schräg oben dargestellt.

Diese Ausführungsform weist einen Boden 3 auf, der eine 50 nm dicke und daher semitransparente Goldschicht auf einem Glassubstrat umfasst. Der Boden ist auf einem Unterteil 30 angeordnet, wobei das Unterteil aus einem Metall gefertigt ist und in der Mitte eine Ausnehmung 3 1 aufweist, so dass der der Boden auch von unten insbesondere für ein Mikroskop-Objektiv optisch sowie mechanisch zugänglich ist. Diese Ausführungsform ist daher besonders geeignet, um die Flüssigkeitszelle 1 auch im Durchlicht zu mikroskopieren.

Das Messfenster 5 wird wie in den anderen dargestellten Ausführungsformen durch ein Andruckelement 9 mit dem Unterteil und dem Boden verbunden, insbesondere wenn die Flüssigkeitszelle eine dafür vorgesehene Halterung eingeführt wird, die das Andruckelement und den Boden aneinander drückt.

Zwischen Messfenster 5 und Boden ist am Rand eine dünne Teflonfolie angeordnet, die als Dichtung 6 der Flüssigkeitszelle 1 dient.

Weiterhin können an der Flüssigkeitszelle auch ein Zu- und Ablauföffnungen angeordnet sein (nicht dargestellt), die beispielsweise als Öffnungen im Boden realisiert sein können.

Durch den Spiegeleffekt der reflektierenden Oberfläche 4, 40 wird das Anregungslicht, beispielswiese der Licht des Anregungslasers, zweimal durch die Probe geleitet, und führt so zu einem idealerweise doppelt so hohen Ramansignal. Weiterhin verursacht die reflektierende Oberfläche und im Gegensatz zu vielen anderen Materialien wie Glas kein Untergrundsignal (Fig. 1 und 2).

Die Bildgebung erfolgt durch ein zumindest im sichtbaren Bereich des Spektrums transparentes Messfenster 5, wobei sich der transparente Bereich bis in den nahen Infrarot-Bereich (bis ca. 1000 nm) und ultra-violetten Bereich (bis ca. 210 nm) erstrecken kann. Ein Set von verschiedenen Messfenstern 5 kann in die Flüssigkeitszelle 1 eingesetzt werden, so dass für jede Messung ein Messfenster 5 mit optimaler Dicke und Transmission bereitgestellt werden kann.

Als Messfenster 5 wird beispielsweise eine transparente Scheibe aus Quarzglas, Gorillaglas, Lotusglas oder Willowglas mit einem Durchmesser von ca. 50 mm verwendet. Die Dicke des Messfensters 5 beträgt ungefähr 500 µm und ist somit einerseits stabil genug um Verformungen und Bruch durch Druck zu widerstehen, andererseits ausreichend dünn, um optische Aberrationen und damit eine Verschlechterung der Bildgebung und Spektroskopie zu minimieren.

Für eine Anregung der Tryptophan Autofluoreszenz mit 266 nm wird bevorzugt ein Messfenster 5 aus Quarz verwendet, welches sowohl im UV als auch im sichtbaren Spektralbereich transparent ist.

Die Schichtdicke der Suspension kann durch den Abstand des Bodens 3 zum Messfenster 5 zwischen 50 µm und 500 µm eingestellt werden. In diesem Bereich ist einerseits eine gute Fokussierung auf die Probenpartikel möglich, andererseits ist das Untergrundsignal durch Ramananregung des Fenstermaterials gering.

Materialien, welche die Messkammer 2 ausbilden, sind alle hochgradig inert.

Der Außendurchmesser der ringförmigen Nut (entspricht in diesem Beispiel der Ausnehmung 8) beträgt 45 mm, wodurch die abbildbare Fläche der Messkammer 2 definiert ist. Die Nuttiefe beträgt 1,7 mm. In die Nut wird zunächst eine Einlegscheibeals Einlageelement 20 eingelegt auf die dann die Dichtung 6 aufgelegt wird. Die Schichtdicke der zu untersuchenden Flüssigkeit liegt zwischen 50 µm (ohne Einlegscheibe oder sehr geringe Höhe der Einlegscheibe) und 500 µm (Einlegscheibe ist 500 µm hoch) und wird über die Höhe des Abstandselements 21 bestimmt, wobei die Höhe des Einlageelements 20, hier also der Einlegscheibe entsprechend angepasst wird, so dass die Messkammer dicht ist. Das zu untersuchende Probenvolumen wird also auch durch die Höhe des Abstandelements 21 bestimmt und beträgt somit zwischen 80 µl und 800 µl. Der O-Ring 6 weist PTFE oder Viton auf, welches lösungsmittelbeständig ist und nicht mit der zu untersuchenden Flüssigkeit in Wechselwirkung tritt. Der O-Ring hat eine Schnurdicke (Höhe) von 2 mm. Nuttiefe und O-Ringdicke bleiben im Wesentlichen gleich. Das Einlageelement 20 ist der Höhe nach der dem Abstandselement 21 angepasst.

### Zusammenbau der Flüssiqkeitszelle

In Fig. 6 ist der Zusammenbau einer erfindungsgemäßen Flüssigkeitszelle als Bildfolge dargestellt. Beginnend bei A) werden die Schritte des Zusammenbaus alphabetisch bis F) vollzogen, um zur zusammengebauten Flüssigkeitszelle zu gelangen.
A) Alle Einzelteile der modularen Flüssigkeitszelle sind noch nicht zusammengefügt, sondern liegen vereinzelt vor. In diesem Beispiel sind das, der Boden 3, das Messfenster 5 (hier mit einer gestrichelten Umrandung dargestellt), eine Einlegscheibe als Einlageelement 20, ein Unterlegscheibe als Abstandselement 21, eine Dichtung 6, sowie eine Andruckelement 9. Der Boden weist in diesem Beispiel keine Zulauf- und Ablauföffnung auf. Alternativ ist aber auch ein Boden 3 mit diesen Öffnungen 71, 72 denkbar.
B) Die Einlegescheibe 20 wird in die Ausnehmung 8 des Bodens 3 eingelegt.
C) Sodann wird die Dichtung 6 auf die Einlegscheibe in der Ausnehmung 8 des Bodens 3 gelegt.
D) Anschließend wird das Abstandselement 21 auf den Boden 3 gelegt.
E) Sodann wird das Messfenster 5 auf die Dichtung 6 gelegt.
F) Dann wird das Andruckelement 9 auf das Messfenster 5 und das Abstandselement 21 gelegt.

In diesem zusammengebauten Zustand, ist die Flüssigkeitszelle 1 in eine Haltevorrichtung 200 mit Schiebeführung 201 einschiebbar. Die Haltevorrichtung 200 ist auf einem Mikroskoptisch 203 angeordnet. Weiterhin umfasst die Haltevorrichtung 200 im Bereich der Schiebführung 201 eine Andruckplatte 202, die dazu ausgebildet ist, Druck auf die Seiten einer eingeschobenen Flüssigkeitszelle 1 in der Schiebeführung 201 auszuüben.

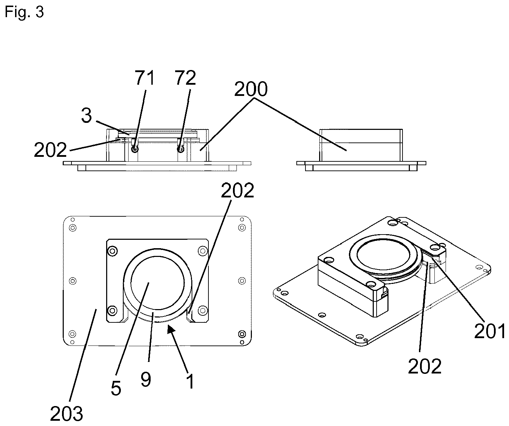

In Fig. 3 ist eine Haltevorrichtung 200 mit eingeschobener Flüssigkeitszelle 1 abgebildet. Die Schiebeführung 201 greift bereichsweise um dasAndruckelement 9. Der Boden 3 wird durch die Andruckplatte 202 in der Schiebeführung 201 nach oben gedrückt (Richtung z-Achse) an die obere Führung gedrückt, so dass das Andruckelement 9 die Flüssigkeitszelle 1 abdichtet und die Flüssigkeitszelle 1 stabil zusammengesetzt bleibt.

In Fig. 3 weist der Boden 3 eine Zulauf- und eine Ablauföffnung 71, 72 auf.

### Handhabung / Befüllung der Flüssigkeitszelle

Die Befüllung der Flüssigkeitszelle 1 mit Probenflüssigkeit kann bei geöffneter (mit offenem oder ohne Messfenster 5) Flüssigkeitszelle 1 oder bei geschlossener Flüssigkeitszelle 1 (mit geschlossenem aufliegendem Messfenster 5) erfolgen. Bei geschlossener Flüssigkeitszelle 1 ist die Probenflüssigkeit über die Zulauf- 71 und Ablauföffnung 72 einfüllbar bzw. abziehbar.

Die Zulauf- 71 und Ablauföffnung 72 sind dabei im Boden 3 der Flüssigkeitszelle 1 so angeordnet, dass die Messkammer 2 befüllt und entlüftet werden kann. Über die Ablauföffnung 72 kann ein Unterdruck in der Messkammer 2 erzeugt werden, der ein blasenfreies Füllen der Messkammer 2 ermöglicht. Dadurch wird vermieden, dass Luft oder Gasblasen in der Suspension die automatische Partikelerkennung verfälschen. Die Befüllung der Messkammer 2 erfolgt beispielsweise mit einer Pipette / Pipettenspitze oder durch den Anschluss von Schläuchen über ein Luer System.

Die Bildgebung erfolgt sodann in Auflichtgeometrie des Mikroskops. Die gesamte Fläche der Messkammer 2 kann abgebildet werden. Die Partikelerkennung erfolgt dabei beispielsweise automatisch durch einen Algorithmus.

### Mikroskop

Ein geeignetes Mikroskop weist für die Bilderfassung und Partikelerkennung ein 10x (typische NA 0,25) oder 20x Objektiv (typische NA 0,45) auf. Die entsprechenden Schärfentiefen liegen bei ca. 20 µm bzw. ca. 5 µm. Die Bilderfassung erfolgt dabei vorzugsweise mit Dunkelfeld-Beleuchtung die aufgrund der glatten, reflektierenden Oberfläche 4 des Bodens 3 möglich ist. Dadurch wird ein höherer Kontrast zwischen Partikeln und Hintergrund erreicht, der die automatische computergestützte Partikelerkennung verbessert.

Insbesondere bei der Ausführung der Flüssigkeitszelle 1 mit variabler Schichtdicke können so die Bedingungen für unterschiedlich große Partikel jeweils optimiert werden. Für kleine Partikel wird eine geringe Schichtdicke eingestellt und das 20x Objektiv verwendet, für größere eine große Schichtdicken und das 10x Objektiv.

Unabhängig von dem verwendeten Objektiv kann bei Verwendung eines im UV transmittierenden Messfensters 5 die Bilderfassung über die Tryptophan Autofluoreszenz erfolgen.

Die Partikel werden durch automatisierte, bildgestützte Ramanspektroskopie analysiert. Dazu wird ein Laser mit der Wellenlänge 532 nm verwendet, die von Proteinen stark gestreut wird. Die Einstrahlung des Laserlichts sowie die Detektion des Ramansignals können durch ein 50x oder 100x Objektiv erfolgen.

In Fig. 4 ist die Wirkung einer reflektierenden Nickel-Oberfläche 101 im Vergleich zu einem Substrat aus Gorillaglas 102 auf ein gemessenes Ramansignal 103, 104 dargestellt.

In der oberen linken Ecke des Diagramms ist ein mikroskopisches Bild der Nickel-Oberfläche 101 sowie eine Abbildung einer Gorillaglas Oberfläche eingefügt. Die Bilder sind annähernd gleich im Kontrast, so dass bei der Bilderfassung keine Unterschiede feststellbar sind. Die im Hellfeld in der Flüssigkeitszelle aufgenommenen Bilder zeigen die Positionen jeweils eines vergleichbaren Partikels, an dem die jeweiligen Ramanspektren aufgenommen wurden.

Eine Ramanmessung 103, 104 der Proteine, zeigt allerdings deutlich Unterschiede. Das gemessene Ramansignal 104 auf dem Gorillaglassubstrat weist deutlich geringere Proteinsignalhöhen 100 als die vergleichbare Messung der gleichen Suspension auf einer reflektierenden Nickeloberfläche 103. Zwar nimmt auch der Untergrund (gestrichelte Linie) bei der Nickeloberfläche zu, dieser kann jedoch einfach vom Signal 103 abgezogen werden, um zu einem korrigierten Signal zu gelangen. Die Signalhöhen 100 der Proteine auf der Nickeloberfläche 103 sind deutlich höher als bei der Messung auf Gorillaglas 104.

Außerdem sind auf der Nickeloberfläche 101, 103 keine Ramansignale vom Substrat selbst detektierbar. Auf dem Gorillaglas Substrat 102, 104 sind allerdings probenfremde Signale 105 zu erkennen.

Die hier offenbarte erfindungsgemäße Flüssigkeitszelle 1, die Haltevorrichtung 200 und das erfindungsgemäße Mikroskop tragen also wesentlich zu einer Verbesserung von bildgestützten, ramanspektroskopischen Analyse von Proteinsuspensionen in Auflicht-Mikroskopenbei.

## Patentansprüche

1. Flüssigkeitszelle (1) zur mikroskopischen Bilderfassung und Raman-spektroskopischen Materialanalyse einer Partikelsuspension in einem Auflicht-Mikroskop, aufweisend zumindest die folgenden Komponenten:
- eine Messkammer (2), aufweisend einen Boden (3), ein dem Boden (3) gegenüberliegendes Messfenster (5) und eine Dichtung (6), wobei der Boden (3) zumindest in einem Bereich der Auflage der Dichtung (6) planar ausgeführt ist, und
- ein Andruckelement (9), das so ausgebildet ist, dass die Flüssigkeitszelle (1) in eine Schiebeführung (201), welche Teil einer Haltevorrichtung (200) ist, eingeführt werden kann,
**dadurch gekennzeichnet, dass**
das Andruckelement (9), nach Einführung in die Schiebeführung (201) von der Schiebeführung (201) niedergehalten wird, so dass das Andruckelement (9) auf das Messfenster (5), die Dichtung (6) und den Boden (3) drückt, so dass die Messkammer (2) abgedichtet wird, wobei das Andruckelement (9) mit einem ersten Bereich auf oder oberhalb des Messfensters (5) angeordnet ist und insbesondere mit einem zweiten Bereich auf oder oberhalb des Bodens (3) angeordnet ist,
und ferner dadurch, dass
der Boden (3) eine reflektierende Oberfläche (4) aufweist, die so beschaffen ist, dass durch das Messfenster (5) einfallendes Raman-Anregungslicht an der reflektierenden Oberfläche (4) gerichtet reflektiert wird, so dass das Ramansignal eines Partikels, insbesondere aufgrund der zweimaligen Anregungschance, erhöht wird.

2. Flüssigkeitszelle gemäß Anspruch 1, **dadurch gekennzeichnet, dass** die reflektierende Oberfläche (4) des Bodens (3) ein Metall oder eine Metalllegierung aufweist, wobei insbesondere der Boden (3) aus dem Metall oder der Metalllegierung besteht.

3. Flüssigkeitszelle nach Anspruch 1 oder 2 **dadurch gekennzeichnet, dass** die reflektierende Oberfläche (4) eine auf dem Boden (3) angeordnete reflektierende Schicht (40) ist, wobei die reflektierende Schicht (40) insbesondere semitransparent ist.

4. Flüssigkeitszelle nach einem der vorhergehenden Ansprüche, **dadurch gekennzeichnet, dass** der Boden (3) eine Zulauföffnung (71) und eine Ablauföffnung (72), zum Befüllen, Entleeren, Vakuumieren und/oder Erzeugen eines Durchflusses in der Messkammer (2), aufweist, wobei die Zulauf- und/oder die Ablauföffnung (71 , 72) insbesondere in einem Bereich des Bodens (3) angeordnet ist / sind, der Teil der Messkammer (2) ist.

5. Flüssigkeitszelle nach einem der vorhergehenden Ansprüche, **dadurch gekennzeichnet, dass** die reflektierende Oberfläche (4) im Wellenlängenbereich von 300 nm bis 800 nm oder von 210 nm bis 1200 nm durchgehend reflektierend ist.

6. Flüssigkeitszelle nach einem der vorherigen Ansprüche, **dadurch gekennzeichnet, dass** die Flüssigkeitszelle ein Abstandelement (21) aufweist, wobei das Abstandelement (21) auf dem Boden (3) der Flüssigkeitszelle (1) insbesondere außerhalb der Messkammer (2) auf dem Boden (3) der Flüssigkeitszelle (1) angeordnet ist, wobei das Andruckelement (9) mit dem zweiten Bereich auf dem Abstandselement (21) aufliegt, so dass das Messfenster (5) durch das Andruckelement (9) nur bis auf einen vordefinierten Abstand an den Boden (3) angedrückt werden kann, wobei die Höhe das Abstandselements (21) besagten Abstand des Messfensters (5) vom Boden (3) vorgibt.

7. Haltevorrichtung (200) zum Verschließen und Fixieren einer Flüssigkeitszelle (1) nach einem der Ansprüche 1-6, aufweisend
- eine Schiebeführung (201)
wobei die Schiebeführung (201) derart ausgestaltet ist, dass eine Flüssigkeitszelle (1) in die Schiebeführung (201) einschiebbar ist und wobei die Schiebeführung (201) eine Andruckplatte (202) aufweist, die dazu ausgebildet ist, über das Andruckelement (9) das Messfenster (5) auf die Dichtung (6) zu drücken, wenn die Flüssigkeitszelle (1) in der Haltevorrichtung (200) aufgenommen ist.

8. Mikroskop aufweisend Mittel zur mikroskopischen Bilderfassung und Ramanspektroskopischen Messungen einer Partikelsuspension, wobei das Mikroskop ein Auflicht-Mikroskop ist und wobei das Mikroskop eine Flüssigkeitszelle (1) gemäß einem der Ansprüche 1 bis 6 aufweist sowie eine Haltevorrichtung (200) gemäß Anspruch 7 aufweist.

9. Mikroskop gemäß Anspruch 8, **dadurch gekennzeichnet, dass** das Mikroskop zur Dunkelfeldbeleuchtung eingerichtet ist und die reflektierende Oberfläche (4) des Bodens (3) der Flüssigkeitszelle (1) als Reflektor für die eingestrahlte Dunkelfeldbeleuchtung dient.

## Claims

1. A liquid cell (1) for microscopic imaging and Raman spectroscopic material analysis of a particle suspension in a reflected light microscope, comprising at least the following components:
- a measuring chamber (2) comprising a bottom (3), a measuring window (5) facing the bottom (3), and a seal (6), wherein
the bottom (3) is planar at least in a region of the support of the seal (6), and
- a pressure element (9) which is designed in such a way that the liquid cell (1) can be inserted into a sliding guide (201) which is part of a holding device (200),
**characterized in that**
the pressure element (9), after insertion into the sliding guide (201), is held down by the sliding guide (201), so that the pressure element (9) presses on the measuring window (5), the seal (6) and the bottom (3), so that the measuring chamber (2) is sealed, the pressure element (9) being arranged with a first region on or above the measuring window (5) and, in particular, being arranged with a second region on or above the bottom (3)
and further **in that**
the bottom (3) has a reflecting surface (4) which is such that Raman excitation light incident through the measuring window (5) is reflected directionally at the reflecting surface (4), so that the Raman signal of a particle is increased, in particular due to the twofold excitation chance.

2. Liquid cell according to claim 1, **characterized in that** the reflecting surface (4) of the bottom (3) comprises a metal or a metal alloy, wherein in particular the bottom (3) consists of the metal or the metal alloy.

3. Liquid cell according to claim 1 or 2, **characterized in that** the reflecting surface (4) is a reflective layer (40) arranged on the bottom (3), the reflective layer (40) being in particular semitransparent.

4. Liquid cell according to one of the preceding claims, **characterized in that** the bottom (3) has an inlet opening (71) and an outlet opening (72), for filling, emptying, vacuuming and/or generating a flow in the measuring chamber (2), wherein the inlet opening and/or the outlet opening (71, 72) is/are arranged in particular in a region of the bottom (3) that is part of the measuring chamber (2).

5. Liquid cell according to one of the preceding claims, **characterized in that** the reflecting surface (4) is continuously reflective in the wavelength range from 300 nm to 800 nm or from 210 nm to 1200 nm.

6. Liquid cell according to one of the preceding claims, **characterized in that** the liquid cell has a spacer element (21), the spacer element (21) being arranged on the bottom (3) of the liquid cell (1), in particular outside the measuring chamber (2) on the bottom (3) of the liquid cell (1), wherein the second region of the pressure element (9) rests on the spacer element (21) so that the measuring window (5) can be pressed against the bottom (3) by the pressure element (9) only to a predefined distance, wherein the height of the spacer element (21) specifies said distance of the measuring window (5) from the bottom (3).

7. Holding device (200) for closing and fixing a liquid cell (1) according to one of the claims 1-6, comprising
- a sliding guide (201)
wherein the sliding guide (201) is configured in such a way that a liquid cell (1) can be pushed into the sliding guide (201), and wherein the sliding guide (201) has a pressure plate (202) which is designed to press the measuring window (5) onto the seal (6) via the pressure element (9) when the liquid cell (1) is received in the holding device (200).

8. Microscope comprising means for microscopic imaging and Raman spectroscopic measurements of a particle suspension, wherein the microscope is an incident light microscope and wherein the microscope comprises a liquid cell (1) according to any one of claims 1 to 6 and comprises a holding device (200) according to claim 7.

9. Microscope according to claim 8, **characterized in that** the microscope is arranged for dark field illumination and the reflecting surface (4) of the bottom (3) of the liquid cell (1) serves as reflector for the irradiated dark field illumination.

## Revendications

1. Cellule à liquide (1) d'imagerie par microscopie et d'analyse par spectroscopie Raman de matériaux d'une suspension de particules dans un microscope à éclairage incident, présentant au moins les composants suivants :
- une chambre de mesure (2) présentant un fond (3), une fenêtre de mesure (5) faisant face au fond (3) et un joint d'étanchéité (6), dans laquelle
le fond (3) est réalisé de manière plane au moins dans une zone du support du joint d'étanchéité (6), et
- un élément d'application par pression (9) qui est réalisé de telle sorte que la cellule à liquide (1) peut être introduite dans un guidage coulissant (201) qui fait partie d'un dispositif de maintien (200),
**caractérisée en ce que**
l'élément d'application par pression (9) est maintenu en place par le guidage coulissant (201) après introduction dans le guidage coulissant (201) de sorte que l'élément d'application par pression (9) exerce une pression sur la fenêtre de mesure (5), le joint d'étanchéité (6) et le fond (3) de sorte que la chambre de mesure (2) est étanchéifiée, dans laquelle l'élément d'application par pression (9) est disposé par une première zone sur ou au-dessus de la fenêtre de mesure (5) et est disposé en particulier par une deuxième zone sur ou au-dessus du fond (3).
et en outre **en ce que**
le fond (3) présente une surface réfléchissante (4) qui est de telle nature que de la lumière d'excitation Raman frappant la fenêtre de mesure (5) est réfléchie de manière dirigée sur la surface réfléchissante (4) de manière à augmenter le signal Raman d'une particule, en particulier en raison de la double chance d'excitation.

2. Cellule à liquide selon la revendication 1, **caractérisée en ce que** la surface réfléchissante (4) du fond (3) présente un métal ou un alliage métallique, dans laquelle en particulier le fond (3) est constitué du métal ou de l'alliage métallique.

3. Cellule à liquide selon la revendication 1 ou 2, **caractérisée en ce que** la surface réfléchissante (4) est une couche réfléchissante (40) disposée sur le fond (3), dans laquelle la couche réfléchissante (40) est en particulier semi-transparente.

4. Cellule à liquide selon l'une quelconque des revendications précédentes, **caractérisée en ce que** le fond (3) présente une ouverture d'alimentation (71) et une ouverture d'évacuation (72), pour remplir, vider, mettre sous vide et/ou générer un flux traversant dans la chambre de mesure (2), dans laquelle l'ouverture d'alimentation et/ou l'ouverture d'évacuation (71, 72) sont disposées en particulier dans une zone du fond (3), qui fait partie de la chambre de mesure (2).

5. Cellule à liquide selon l'une quelconque des revendications précédentes, **caractérisée en ce que** la surface réfléchissante (4) est réfléchissante en continu dans la plage de longueurs d'onde de 300 nm à 800 nm, ou de 210 nm à 1200 nm.

6. Cellule à liquide selon l'une quelconque des revendications précédentes, **caractérisée en ce que** la cellule à liquide présente un élément d'espacement (21), dans laquelle l'élément d'espacement (21) est disposé sur le fond (3) de la cellule à liquide (1) en particulier à l'extérieur de la chambre de mesure (2) sur le fond (3) de la cellule à liquide (1), dans laquelle l'élément d'application par pression (9) repose par la deuxième zone sur l'élément d'espacement (21) de sorte que la fenêtre de mesure (5) peut être appliquée par pression par l'élément d'application par pression (9) seulement jusqu'à un espacement prédéfini sur le fond (3), dans laquelle la hauteur de l'élément d'espacement (21) spécifie ledit espacement de la fenêtre de mesure (5) par rapport au fond (3).

7. Dispositif de maintien (200) pour fermer et bloquer une cellule à liquide (1) selon l'une quelconque des revendications 1 - 6, présentant
- un guidage coulissant (201),
dans lequel le guidage coulissant (201) est configuré de telle manière qu'une cellule à liquide (1) peut être introduite par coulissement dans le guidage coulissant (201) et dans lequel le guidage coulissant (201) présente une plaque d'application par pression (202), qui est réalisée pour pousser la fenêtre de mesure (5) sur le joint d'étanchéité (6) par l'intermédiaire de l'élément d'application par pression (9) quand la cellule à liquide (1) est logée dans le dispositif de maintien (200) .

8. Microscope présentant des moyens d'imagerie par microscope et de mesures par spectroscope Raman d'une suspension de particules, dans lequel le microscope est un microscope à éclairage incident et dans lequel le microscope présente une cellule à liquide (1) selon l'une quelconque des revendications 1 à 6 et présente un dispositif de maintien (200) selon la revendication 7.

9. Microscope selon la revendication 8, **caractérisé en ce que** le microscope est mis au point pour l'éclairage à fond noir et la surface réfléchissante (4) du fond (3) de la cellule à liquide (1) fait office de réflecteur pour l'éclairage à fond noir émis.
